# EUROPEAN PATENT APPLICATION

(11) **EP 4 641 992 A1**
(43) Date of publication of application: **29.10.2025**
(21) Application number: 23907619.3
(22) Date of filing: 15.12.2023
(51) Int. Cl.: H04L 27/26, H04L 27/20, H04W 84/12, H04W 88/04

(54) **METHOD AND DEVICE FOR TRANSMITTING OR RECEIVING RELAY FRAME IN WIRELESS LAN SYSTEM**

(30) Priority: 19.12.2022 KR 20220178437
(71) Applicant: LG Electronics Inc., Yeongdeungpo-gu Seoul 07336 (KR)
(72) Inventor: LIM, Dongguk, Seoul 06772 (KR); CHUN, Jinyoung, Seoul 06772 (KR); CHOI, Jinsoo, Seoul 06772 (KR); PARK, Eunsung, Seoul 06772 (KR); JANG, Insun, Seoul 06772 (KR)
(74) Representative: Plasseraud IP
(86) International application number: PCT/KR2023/020746
(87) International publication number: WO 2024/136333

(57) **Abstract**

A method and a device for transmitting or receiving a relay frame in a wireless LAN system are disclosed. A method performed by a first station (STA) in a wireless LAN system according to an embodiment of the present disclosure may comprise the steps of: receiving, from an access point (AP), a request frame related to initiation of a relay operation targeted at one or more second STAs; transmitting a response frame for the request frame to the AP; receiving a PPDU including data based on the relay operation from the AP; and transmitting the PPDU including the data to the one or more second STAs. The request frame may comprise ID information for identifying the one or more second STAs as destinations of the relay operation.

## Description

### [TECHNICAL FIELD]

The present disclosure relates to a method and device for transmitting and receiving a relay frame in a wireless local area network (WLAN) system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [DISCLOSURE]

### [TECHNICAL PROBLEM]

A technical object of the present disclosure is to provide a method and device for transmitting and receiving a relay frame in a wireless local area network (WLAN) system.

A technical object of the present disclosure is to provide a method and device for transmitting and receiving a relay frame through a relay STA controlled by an AP in a wireless LAN system.

The technical objects to be achieved by the present disclosure are not limited to the above-described technical objects, and other technical objects which are not described herein will be clearly understood by those skilled in the pertinent art from the following description.

### [Technical Solution]

A method performed by a first station (STA) in a wireless LAN system according to an aspect of the present disclosure may comprise: receiving, from an access point (AP), a request frame related to initiation of a relay operation targeting one or more second STAs; transmitting, to the AP, a response frame for the request frame; receiving, from the AP, a physical layer protocol data unit (PPDU) including data based on the relay operation; and transmitting, to the one or more second STAs, the PPDU including the data. Herein, the request frame may include ID information for identifying the one or more second STAs as a destination of the relay operation.

A method performed by an AP in a wireless LAN system according to an additional aspect of the present disclosure may comprise: transmitting, to a first STA, a request frame related to initiation of a relay operation targeting one or more second STAs; receiving, from the first STA, a response frame to the request frame; and transmitting, to the first STA, a physical layer protocol data unit (PPDU) including data based on the relay operation. Herein, the request frame may include ID information for identifying the one or more second STAs as a destination of the relay operation.

### [Technical Effects]

According to the present disclosure, a method and device for transmitting and receiving a relay frame in a wireless local area network (WLAN) system may be provided.

According to the present disclosure, a method and device for transmitting and receiving a relay frame through a relay STA controlled by an AP in a wireless LAN system may be provided.

According to the present disclosure, by performing signal transmission to an STA using a relay method, the influence of range and obstacles may be reduced and the reception quality (e.g., received SNR) of the STA may be improved, thereby providing a technical effect of reducing latency for signal transmission and improving throughput.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
Referring to FIG. 8, a relay STA may correspond to a non-AP STA that performs relay transmission controlled by an AP.
FIG. 9 illustrates an example of a relay transmission procedure according to an embodiment of the present disclosure.
FIG. 10 illustrates another example of a relay transmission procedure according to an embodiment of the present disclosure.
FIG. 11 illustrates a format of a relay frame applicable to an embodiment of the present disclosure.
FIG. 12 illustrates an operation flowchart by a first STA according to an embodiment of the present disclosure.
FIG. 13 illustrates an operation flowchart by an AP according to an embodiment of the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

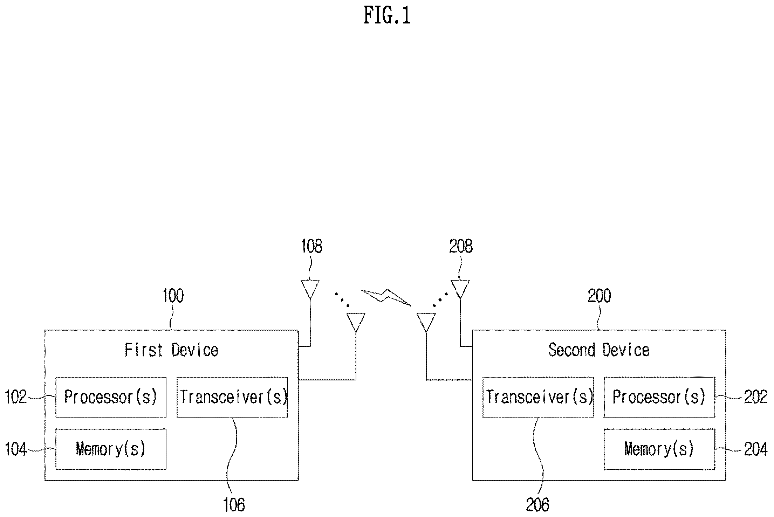

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU/packet / signal may be transmitted and received through the UL. In UL communication, a transmitter may be part of a non-AP STA, and a receiver may be part of an AP STA.

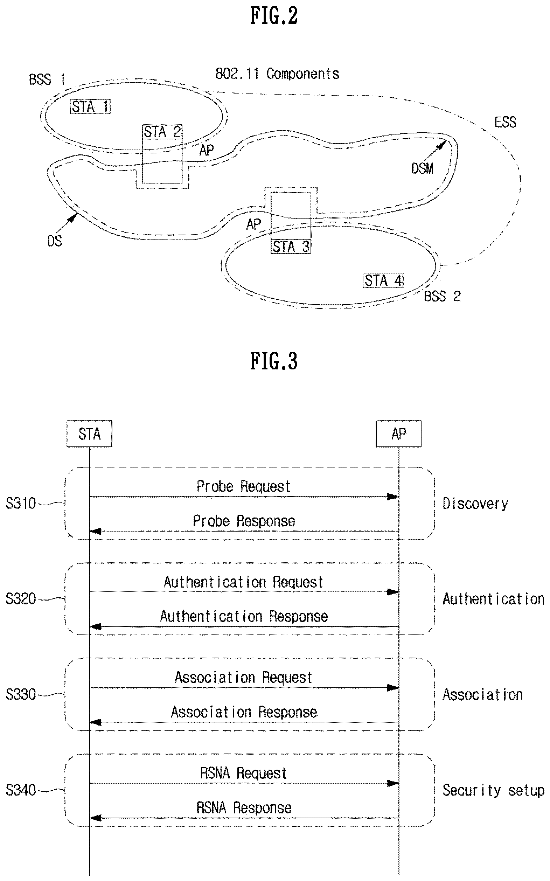

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

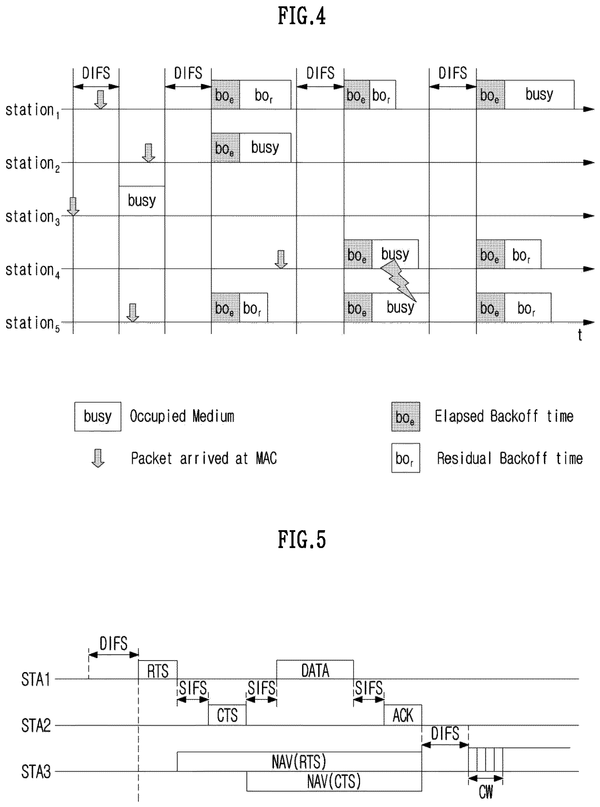

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

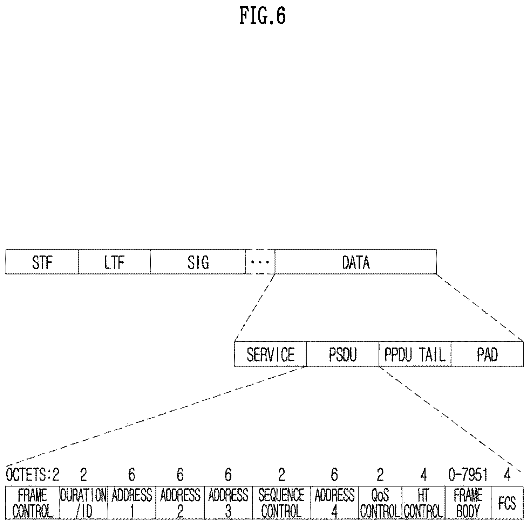

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

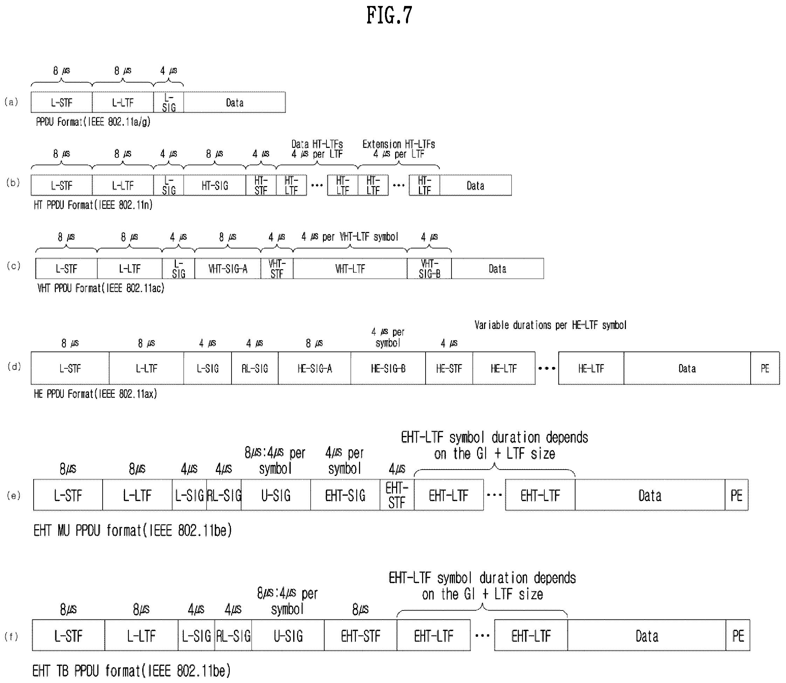

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Method for transmitting and receiving relay frames controlled by AP

In next-generation wireless LAN systems (e.g., Next Wi-Fi, IEEE beyond 802.11be, etc.), various technologies are being considered to support high throughput, low latency, extended range, etc. in order to support ultra-high reliability (UHR) in signal transmission to STA.

The proposed method in the present disclosure relates to a method of transmitting a signal to an STA using a relay method controlled by an AP to expand coverage/range for reliable transmission to various IoT devices as well as outdoors. Specifically, a data construction for transmitting a signal using a relay STA (e.g., PPDU, A-MPDU) and a signaling method for the relay are proposed.

In the case of the method proposed in the present disclosure, considering the ease of implementation for the relay and the complexity of the operation, it may be based on a relay transmission method controlled by the AP.

For clarity of explanation, in the embodiments of the present disclosure below, a relay STA controlled by an AP is referred to as an AP controlled Relay STA (ACRS).

For example, ACRS performs relay transmission for data received from an AP within a BSS, and at this time, all control of ACRS for relay may be performed by the corresponding AP. That is, ACRS may transmit a signal (e.g., a data frame) received from an AP to an end-user/STA based on information received from the AP.

Here, ACRS may correspond to an independent relay device that only performs relay transmission, or may correspond to a non-AP STA that supports relay.

The following disclosure specifically proposes a procedure (hereinafter, embodiment 1) performed between an AP and an ACRS to initiate ACRS-based relay transmission, and a relay transmission procedure (hereinafter, embodiment 2) performed after the procedure.

The embodiments described below are distinguished only for the sake of clarity of explanation, and some components of one embodiment may be replaced with some components of another embodiment or may be applied in combination.

### Embodiment 1

This embodiment relates to negotiation/association and initiation procedures performed between an AP and a relay STA in relation to relay transmission.

An ACRS relaying data to an STA under the control of an AP may use a (re)association request/response frame or a probe request/response frame to indicate that it is a relay STA or an STA supporting relay transmission. At this time, the frame may be configured to include a relay support field, relay transmission capabilities, and/or a relay operation element.

For example, the AP may identify a relay STA (i.e., ACRS) through negotiation using the relay support field, relay transmission capability, and/or relay operation element, and may assign an ID to the identified relay STA(s). As an example, the ID of the relay STA (e.g., RSID) may be configured as a specific ID of the STA ID.

That is, a relay STA (i.e., ACRS) may be associated with an AP through the exchange procedure of a (re)association request/response frame or a probe request/response frame as described above.

The AP may obtain information for the relay STA through the aforementioned association procedure, and the AP may perform an initiation procedure for performing relay transmission within the BSS.

In this regard, in order to initiate the aforementioned relay transmission, the AP may transmit a request frame to the relay STA and receive a response frame thereto from the relay STA.

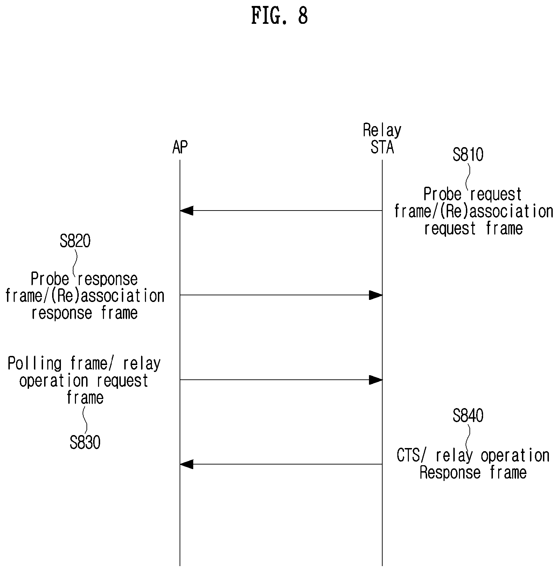

FIG. 8 illustrates a negotiation/association and initiation procedure related to relay transmission between an AP and a relay STA according to an embodiment of the present disclosure.

Referring to FIG. 8, a relay STA may correspond to a non-AP STA that performs relay transmission controlled by an AP.

The relay STA may transmit a request frame related to relay transmission negotiation/association to the AP (S810). In response, the AP may transmit a response frame to the relay STA (S820). For example, a probe/(re)association request frame may be used as the request frame, and a probe/(re)association response frame may be used as the response frame.

In this regard, the request frame of step S810 and the response frame of step S820 may be composed of a relay support field, relay transmission capabilities, and/or a relay operation element.

Thereafter, the AP may transmit a specific request frame to the relay STA to initiate relay transmission (S830), and the relay STA may transmit a response frame to the AP (S840).

For example, a specific request frame may correspond to a polling frame or a relay operation request frame, and a response frame may correspond to a CTS frame or a relay operation response frame.

In the following disclosure, for the sake of clarity of explanation, a case in which relay transmission is initiated via a polling frame is described as a representative example. The proposed method in the present disclosure is not limited to the frame name, and can be extended to cases in which it is replaced with another frame name having the same function and information.

To initiate relay transmission using a relay STA identified by the AP through a negotiation/association procedure, the AP may transmit a polling frame to the relay STA. For example, the polling frame transmitted by the AP may be defined as a relay operation request frame or a relay initiation frame.

In this regard, the polling frame transmitted by the AP may include a relay support/request field, a relay mode field, a relay transmission related ID field, a relay transmission parameter field, an RU allocation field, and/or an immediate ACK support field.

Below, each field included in the polling frame is described in detail.

For example, the Relay Support/Request field indicates support for relay transmission or a request for relay transmission. The field may be configured as 1 bit, in which case setting the field to a value of 1 may indicate a request for relay transmission. In this regard, the specific bit value configuration is also possible in the opposite case.

For example, the relay mode field may indicate whether it is an individual transmission or a group transmission. Here, individual transmission means a case where a single STA is targeted for relay transmission, and group transmission means a case where a plurality of STAs or grouped STAs are targeted for relay transmission. The field may be configured with 1 bit, in which case a value of 0 may be defined to indicate an individual transmission, and a value of 1 may be defined to indicate a group transmission. In this regard, the specific bit value configuration may also be the opposite case.

For example, with respect to the relay transmission related ID field, the polling frame may include one or more of source ID information, destination ID information, relay ID information, number of STA for relay information, or relaying STA list information.

Specifically, the source ID information indicates the ID information of the STA that initiates the relay transmission, and may be set to the ID of the AP or the BSS ID.

Destination ID information indicates ID information for an STA that is a target of relay transmission. In case of transmission for an individual STA (i.e., when the relay mode field is set to a value of 0), the destination ID information may be set to the ID, STA-ID information, for the final STA that receives the signal/data through the relay transmission. In case of transmission for a group STA or multiple STAs (i.e., when the relay mode field is set to a value of 1), the destination ID information may be set to a group ID (GID).

Relay ID information may indicate ID information for a relay STA performing relay transmission, and may be set to an ID assigned from the AP when associating with the AP.

The STA number information for the relay indicates a number of STAs that receive signals/data through relay transmission, i.e., the number of STAs that participate in transmission.

The relaying STA list information indicates information for STA(s) participating in relay transmission, and may be composed of ID information of the corresponding STA(s).

For example, the relay transmission parameter field may be composed of a combination of one or more of bandwidth (BW) information, modulation and coding scheme (MCS) difference information, MCS information, and N_STS information.

Specifically, the bandwidth information indicates information for the bandwidth used for relay transmission, and may indicate, for example, 20 MHz, 40 MHz, 80 MHz, 160 MHz, and/or 320 MHz.

The MCS difference information may indicate whether the relay operation supports using different MCSs for reception from the AP and transmission to the STA. For example, the MCS difference information may consist of 1 bit, in which case a value of 0 may indicate non-support and a value of 1 may indicate support. Additionally or alternatively, the MCS difference information may be used to indicate a difference in MCS values used by the relay when transmitting and receiving signals. For example, the information/subfield may be used to indicate a difference of 0, 1, 2, 3, and 4.

The MCS information indicates an MCS value used in relay transmission. In this regard, since relay transmission may consider a general high SNR, the corresponding MCS value may be limited to a value indicating 16QAM to 256QAM. Additionally or alternatively, the corresponding MCS information may be used to indicate a maximum MCS (max MCS) value used in relay transmission.

N_STS information indicates a value for the number of space time streams (STS) used in relay transmission, and may consist of 3 bits.

For example, the RU allocation field indicates information for the relay STA to allocate RU resources for transmitting a response frame.

For example, the Immediate ACK Support field indicates whether immediate ACK transmission is supported after receiving data from the AP. The field consists of 1 bit, and setting it to a value of 1 may be defined to indicate that immediate ACK is supported, and setting it to a value of 0 may be defined to indicate ACK transmission by a request frame. In this regard, the specific bit value configuration is also possible in the opposite case.

A relay STA that receives a polling frame configured as described above from an AP may transmit a response frame to the AP to indicate whether or not it accepts the relay transmission.

At this time, a CTS frame or a relay operation response frame may be used as a response frame.

If a CTS frame is used as a response frame, only a relay STA that may perform relay transmission requested by the AP may transmit a CTS frame to the AP after SIFS after receiving a polling frame (i.e., a request frame). At this time, the CTS frame may be transmitted using an RU allocated by the AP to the relay STA (e.g., the RU allocation field in the aforementioned polling frame).

The AP may determine whether the relay STA participates in the relay transmission based on whether the CTS frame is received.

In contrast, when a relay operation response frame is used as a response frame, the response frame may be transmitted SIFS after receiving the request frame. Here, the response frame may include a relay STA ID field, a status field, a relay operation parameter field, and/or an immediate ACK field.

For example, the relay STA ID field indicates ID information for the relay STA transmitting the response frame.

For example, the status field indicates whether the AP accepts the requested relay transmission and may be set to success, deny, deny and performance parameters. Here, success indicates acceptance of the relay transmission, deny indicates rejection of the relay transmission, and deny and performance parameters may indicate rejection of the current relay transmission and transmission with preferred relay transmission parameters.

For example, the relay operation parameters field may be set to information for parameter(s) that the relay STA prefers/desires to use when transmitting relay. For example, the field may be configured with a combination of MCS information, MCS difference information, N_STS information, etc. In this regard, if the status field is set to success or deny, the relay operation parameters field may not be included in the response frame. The relay operation parameters field may be included in the response frame only when the status field is set to deny and performance parameters.

For example, the immediate ACK support field indicates whether to perform an immediate ACK transmission or an ACK transmission upon request when a relay STA transmits an ACK transmission after receiving data from an AP.

With respect to the aforementioned association/negotiation procedure, a separate link/association procedure may not be necessary between the relay STA and the STA that is the target of the relay transmission (i.e., the final STA). This is because both the relay STA and the final STA correspond to non-AP STAs that are associated with the AP, and the relay transmission is controlled by the AP.

### Embodiment 2

This embodiment relates to a relay transmission procedure performed between an AP, a relay STA, and an STA that is a target of relay transmission (e.g., a final STA).

When relay transmission is determined through request/response frame exchange between the AP and the relay STA as in Embodiment 1, the AP may transmit the data to the relay STA in order to transmit the data to the STA that is the target of the relay transmission (i.e., the intended STA, the end STA, the addressed STA). In the following embodiment, for the sake of clarity of explanation, the STA that is the target of the relay transmission is referred to as the end STA.

A relay STA that receives data from an AP may transmit the data/signal received from the AP to the final STA using the same channel as the channel used by the AP to transmit data to the relay STA.

As described above, since the relay STA transmits and receives signals using the same channel used by the AP, the AP does not need to separately signal channel information for relay transmission to the relay STA. As described above, the relay STA transmits and receives signals using the time division duplex (TDD) method, and may perform transmission and reception within the TXOP allocated from the AP.

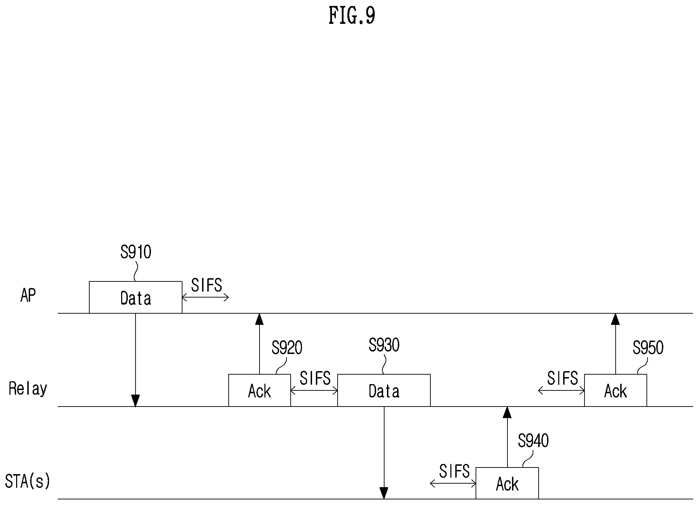

FIG. 9 illustrates an example of a relay transmission procedure according to an embodiment of the present disclosure.

Referring to FIG. 9, "AP" corresponds to an AP that initiates relay transmission, "Relay" corresponds to a relay STA that forwards a relay frame received from the AP, and "STA(s)" corresponds to a final STA that is a target of relay transmission.

The AP may transmit data (e.g., data frame) targeting the final STA to the relay STA (S910).

A relay STA that has received data from an AP may transmit an ACK frame for the received data to the AP after SIFS (S920). The ACK frame indicates whether the received signal/data was successfully received, and additionally or alternatively, the ACK frame may be transmitted together with indication information indicating that relay transmission will be performed.

At this time, ACK frame transmission may be performed according to the ACK policy negotiated between the AP and the relay STA.

After transmitting an ACK frame to the AP, the relay STA may transmit data received from the AP to the final STA after SIFS (S930).

The final STA that has received data from the relay STA may transmit an ACK frame to the relay STA to indicate whether or not the data has been received (S940).

For example, when relay transmission is performed targeting one final STA, the ACK frame may be transmitted in the immediate ACK manner after SIFS after data reception, as illustrated in FIG. 9.

The relay STA that has received an ACK frame from the final STA(s) may transmit an ACK frame to the AP after SIFS after receiving the ACK frame (S950). At this time, the ACK frame that the relay STA transmits to the AP may include identification information (e.g., ID) for the final STA(s), ACK indication information, etc.

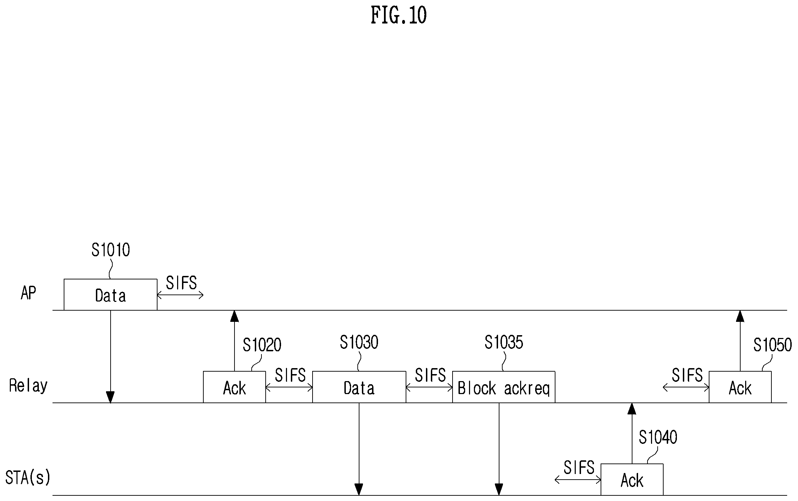

FIG. 10 illustrates another example of a relay transmission procedure according to an embodiment of the present disclosure.

Referring to FIG. 10, "AP" corresponds to an AP that initiates relay transmission, "Relay" corresponds to a relay STA that forwards a relay frame received from the AP, and "STAs" correspond to a plurality of final STAs that are targets of relay transmission.

The procedure in Fig. 10 corresponds to a procedure for performing relay transmission for a plurality of final STAs (or grouped final STAs). In this regard, in the case of the procedure in Fig. 10, compared to the procedure in Fig. 9, a block-ACK request frame transmission operation by the relay STA may be added.

Steps S1010 to S1030, and S1050 in FIG. 10 are identical to the descriptions in steps S910 to S930, and S950 in FIG. 9, so redundant specific descriptions are omitted.

As described above, after the relay STA transmits data received from the AP to a plurality of final STAs, in order to receive an ACK frame from the plurality of final STAs, the relay STA may transmit a block-ACK request frame to the plurality of final STAs after SIFS (S1035). Through the transmission of the block-ACK request frame, transmission of an ACK frame from each STA may be solicited.

Accordingly, after transmitting the block-ACK request frame, after SIFS, the relay STA may receive an ACK frame from each STA belonging to the plurality of final STAs (S1040).

With respect to the relay transmission procedure described above in the present disclosure, the TXOP for performing the relay transmission may be set as in the example described below. For example, the TXOP may be set by the AP initiating the relay transmission.

For example, the AP sets TXOP for the entire section for relay transmission, and the TXOP may be set as follows.
- TXOP = Transmission PPDU length from AP to relay STA (e.g. ACRS) + SIFS + ACK length from relay STA to AP + SIFS + Transmission PPDU length from relay STA to final STA (e.g. STA that is the target of relay transmission) + SIFS + ACK length from final STA to relay STA + SIFS + ACK length from relay STA to AP

Additionally, when a block-ACK request transmission process for a plurality of final STAs such as the aforementioned FIG. 10 is added, a block-ACK request transmission time and an SIFS associated therewith may be additionally applied to the TXOP configuration.

In this regard, the TXOP set as described above may be transmitted by being included in a PPDU that the AP transmits to the relay STA for relay transmission, and the TXOP value may be transmitted by being included in the U-SIG field of the corresponding PPDU.

Additionally, the TXOP of the PPDU transmitted by the relay STA to the final STA may be set as follows.
- TXOP_relaytoSTA = Transmission PPDU length from relay STA to final STA + SIFS + ACK length from final STA to relay STA + SIFS + ACK length from relay STA to AP

Here, TXOP_relaytoSTA included in the PPDU transmitted by the relay STA to the final STA may be set to a value smaller than the TXOP set by the AP for signal transmission to the relay STA.

In this regard, the TXOP_relaytoSTA set as described above may be transmitted by being included in the U-SIG field in the PPDU transmitted by the relay STA to the final STA.

Hereinafter, in this disclosure, an ACK frame and an ACK transmission method for relay transmission are described in relation to the relay transmission procedure described above in this disclosure.

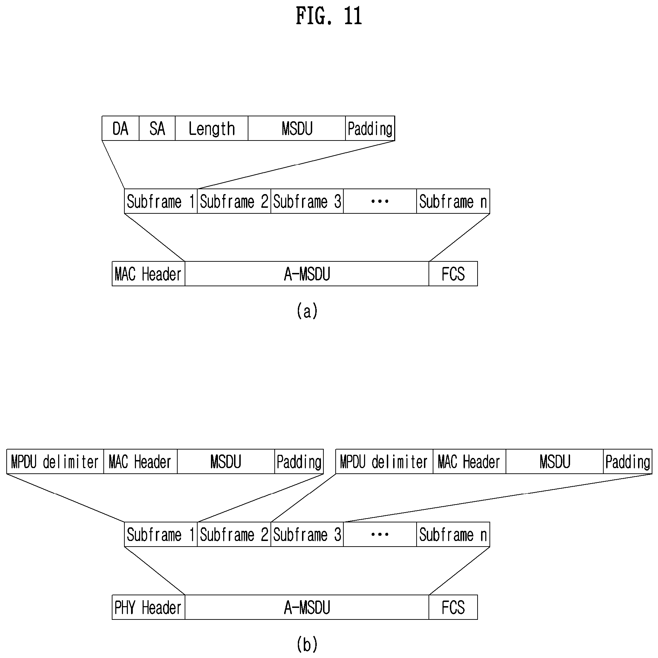

The PPDU transmitted by the AP to the relay STA may be transmitted in the format of an aggregated-MAC service data unit (A-MSDU) or an aggregated-MAC protocol data unit (A-MPDU), and may be based on a frame format structure as shown in FIG. 11.

FIG. 11 illustrates a format of a relay frame applicable to an embodiment of the present disclosure.

Referring to (a) of FIG. 11, an A-MSDU based PPDU may include one MAC header. In contrast, referring to (b) of FIG. 11, an A-MPDU based PPDU may include a MAC header for each subframe constituting the A-MPDU.

Using a frame format structure such as FIG. 11, data transmitted by an AP to a relay STA may include information on one or more final STAs. However, the data/signal is not transmitted directly to the final STA but is transmitted through the relay STA. Accordingly, in the case where relay transmission targets a plurality of final STAs, if all MAC headers included in the PPDU are decoded and verified and ACK is transmitted, unnecessary latency may occur.

In consideration of this, in order to inform the AP whether or not a signal/data has been received from the AP, the relay STA may be configured to transmit an ACK frame to the AP by considering the first MAC header and FCS of the received signal/data. Here, the FCS may correspond to a field for error detection (e.g., a 32-bit CRC field) included in the corresponding PPDU. Alternatively, the ACK frame may be determined based on whether or not the first MAC header has been received.

That is, when using the A-MPDU structure for relay transmission targeting multiple STAs, ACK frame transmission (e.g., ACK frame transmitted from a relay STA to an AP) may be performed by considering the MAC header and FCS of the MPDU constituting the first subframe belonging to the A-MPDU.

As described above, since the ACK is determined only by [the first MAC header and FCS] or [the first MAC header] of the received signal/data, there is a technical effect of reducing latency by allowing the upper MAC level operation to be omitted.

The ACK frame transmitted by the relay STA to the AP may be transmitted SIFS after receiving data from the AP.

Additionally or alternatively, the AP may terminate the relay operation if it does not receive an ACK frame from the relay STA after SITF after completion of signal/data transmission or within an expired time determined/set upon initiation of association/relay operation with the relay STA.

In this regard, termination of relay operation may be performed by the AP transmitting a termination frame to the relay STA. Additionally or alternatively, as described above, the relay operation may be defined to be terminated when the expiration time determined/set at the time of initiation of the association/relay operation passes without receiving an ACK frame.

Therefore, the ACK operation for relay transmission proposed in the present disclosure may be performed as follows.
- Step 1. The relay STA may receive signals/data for relay operation/transmission from the AP.
- Step 2. A relay STA that has received a signal/data from an AP may transmit an ACK frame to the AP, including information indicating that it has received a signal/data from the AP, after receiving the MAC header of the first MPDU/first subframe of the received PPDU and checking the FCS.

Here, the ACK frame may include indication information indicating that relay operation/transmission is performed. Additionally, the ACK policy for signal/data transmission from the AP to the relay STA may be set to immediate ACK transmission, i.e., implicit ACK transmission. Here, immediate ACK transmission may mean ACK transmission performed after SIFS after signal/data reception.

Through the aforementioned ACK frame transmission, it may be possible to maintain the TXOP set by the AP and protect the relay operation/transmission. Additionally, if it is determined that the relay STA has not received information in the MAC header or has received an incorrect MAC header, the ACK/ACK frame transmission may not be performed.
- Step 3. After transmitting an ACK frame to the AP, the relay STA may transmit a signal/data (i.e., a signal/data received from the AP) to the final STA after SIFS.
- Step 4. If the AP does not receive an ACK frame from the relay STA for a certain period of time after transmitting a signal/data to the relay STA, the AP may terminate the relay transmission and also terminate the TXOP related thereto. Here, the certain period of time may correspond to one or more of SIFS, ACK time duration, or expired time.

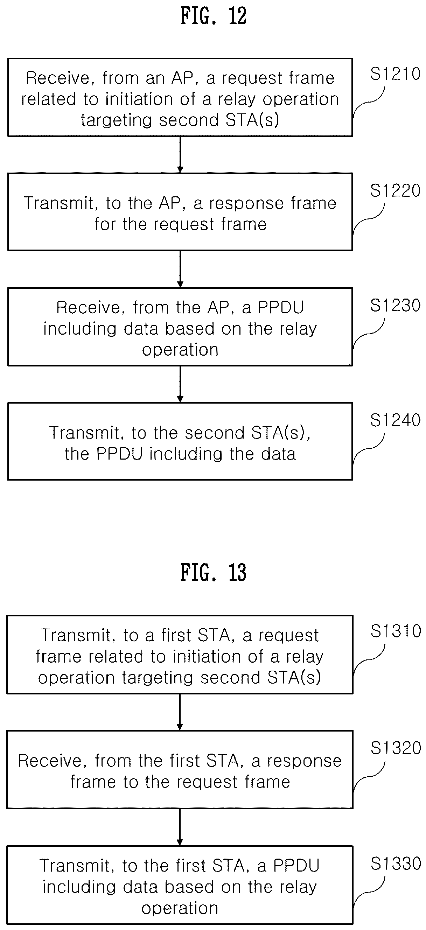

Hereinafter, the operation of the STA according to the embodiments of the present disclosure described above will be described with reference to FIGS. 12 and 13.

That is, the examples of FIGS. 12 and 13 may correspond to some of the various examples of the present disclosure. For example, in FIGS. 12 and 13, the first STA may correspond to a relay STA (e.g., ACRS), and the second STA may correspond to a target STA (i.e., end-STA) of the relay transmission.

FIG. 12 illustrates an operation flow chart by a first STA according to an embodiment of the present disclosure.

Referring to FIG. 12, the first STA may correspond to a non-AP STA controlled by the AP for relay transmission.

The first STA may receive a request frame related to the initiation of a relay operation targeting one or more second STAs (e.g., a polling frame, a relay operation request frame described above in the present disclosure) from the AP (S1210).

Here, the request frame may include ID information (e.g., destination ID information) for identifying one or more second STAs as the destination of the relay operation.

For example, the corresponding ID information may be set based on the mode of the relay operation indicated by the relay mode related information included in the request frame of step S1210 (e.g., the relay mode field). As a specific example, if the mode of the relay operation corresponds to a mode targeting a single second STA (e.g., an individual transmission mode), the corresponding ID information may be set to an ID of the single second STA. In contrast, if the mode of the relay operation corresponds to a mode targeting a plurality of second STAs (e.g., a group transmission mode), the corresponding ID information may be set to a specific ID that groups the plurality of second STAs (e.g., a group ID).

Additionally or alternatively, the request frame may further include ID information for identifying the AP as a source of the relay operation (e.g., source ID information) and ID information for identifying the first STA as a relay of the relay operation (e.g., relay ID information).

Additionally or alternatively, the request frame may include at least one of information for the number of second STAs participating in the relay operation or information for an ID List for the second STAs participating in the relay operation.

Additionally or alternatively, the request frame may include one or more parameters related to the relay operation. Here, the one or more parameters may include one or more of bandwidth information for the relay operation, modulation and coding scheme (MCS) information, MCS difference related information, or space time stream number information. In this regard, the MCS difference related information may include one or more of information indicating whether different MCSs are applicable to transmission and reception by the first STA in the relay operation, or information indicating a difference in MCS values applied to transmission and reception by the first STA in the relay operation.

Additionally or alternatively, the request frame may further include resource unit (RU) allocation information for transmission of a response frame thereto, information indicating whether immediate ACK frame transmission is supported for reception of a data frame from the AP, etc.

The first STA may transmit a response frame to the request frame of step S1210 (S1220).

For example, the response frame may be transmitted via a resource indicated by the RU allocation information included in the request frame.

In this regard, the response frame may correspond to one of a clear to send (CTS) frame or a frame including one or more fields related to the relay operation. Here, the one or more fields may include at least one of a first field indicating ID information of an STA transmitting the response frame (i.e., a first STA) (e.g., a relay STA ID field), a second field indicating whether the relay operation is accepted (e.g., a status field), a third field indicating a parameter related to the relay operation (e.g., a relay operation parameter field), and a fourth field indicating whether to transmit an immediate ACK (e.g., an immediate ACK field). In this case, whether the third field is included may be determined according to a value indicated by the second field.

If the initiation of the relay operation is accepted by the procedure described above, the first STA may receive a PPDU (physical layer protocol data unit) including data based on the relay operation from the AP (S 1230). That is, the data may target one or more second STAs. Here, the U-SIG field of the PPDU may include TXOP information for the relay operation described above.

After receiving a PPDU including the corresponding data from the AP, the first STA may transmit the PPDU including the corresponding data to one or more second STAs after SIFS (S1240). Here, the U-SIG field of the corresponding PPDU may include TXOP information related to the procedure between the first STA and the second STA in the aforementioned relay operation (e.g., TXOP_relaytoSTA).

Additionally, after receiving the PPDU including the data in step S1230, the first STA may transmit an ACK frame to the AP after SIFS. At this time, ACK information in the ACK frame (e.g., whether ACK is received) may be set based on whether one MAC header included in the PPDU including the data is received (and FCS check). For example, if the PPDU including the data is configured with one or more subframes and is configured using the A-MPDU frame format, one MAC header involved in the ACK information may correspond to a MAC header included in a first subframe among the one or more subframes. For another example, if the PPDU including the data is configured with one or more subframes and is configured using the A-MSDU frame format, one MAC header involved in the ACK information may correspond to a MAC header included in the A-MSDU frame format.

Additionally, if a PPDU including data in step S1240 is transmitted to a single second STA (e.g., in the case of individual transmission related to a relay operation), the first STA may be configured to receive an ACK frame from the single second STA after SIFS after transmitting the PPDU including the corresponding data; and to transmit an ACK frame to the AP after SIFS after receiving the ACK frame from the single second STA. Alternatively, if a PPDU including data in step S1240 is transmitted to a plurality of second STAs (e.g., in the case of group transmission related to a relay operation), the first STA may be configured to transmit a block-ACK request frame to the plurality of second STAs after SIFS after transmitting the PPDU including the corresponding data; and to receive ACK frames from the plurality of second STAs after SIFS after transmitting the block-ACK request frame; and to transmit an ACK frame to the AP after SIFS after receiving the ACK frames from the plurality of second STAs.

The method performed by the first STA described in the example of FIG. 12 may be performed by the first device (100) of FIG. 1. For example, one or more processors (102) of the first device (100) of FIG. 1 may be configured to receive a request frame related to initiation of a relay operation from an AP through one or more transceivers (106), transmit a response frame thereto to the AP, receive a PPDU including data based on the corresponding relay operation from the AP, and transmit the PPDU including the corresponding data to the second STA(s). Furthermore, one or more memories (104) of the first device (100) may store commands for performing the method described in the example of FIG. 13 or the examples described above when executed by one or more processors (102).

FIG. 13 illustrates an operation flow chart by an AP according to an embodiment of the present disclosure.

Referring to FIG. 13, the first STA may correspond to a non-AP STA controlled by the AP for relay transmission.

The AP may transmit a request frame related to the initiation of a relay operation targeting one or more second STAs to the first STA (S1310).

In this regard, the request frame may include ID information for identifying one or more second STAs as a destination of the relay operation.

The AP may receive a response frame for the request frame from the first STA (S1320) and transmit a PPDU including data based on the aforementioned relay operation to the first STA (S1330).

The specific description of information included in the request frame, information included in the response frame, transmission and reception of ACK frames related to relay operation, etc. in Fig. 13 is the same as that described in Fig. 12, so redundant description is omitted.

The method performed by the AP described in the example of FIG. 13 may be performed by the second device (200) of FIG. 1. For example, one or more processors (202) of the second device (200) of FIG. 1 may be configured to transmit a request frame related to initiation of a relay operation targeting second STA(s) to the first STA via one or more transceivers (206), receive a response frame thereto from the first STA, and transmit a PPDU including data based on the relay operation to the first STA. Furthermore, one or more memories (204) of the second device (200) may store commands for performing the method described in the example of FIG. 13 or the examples described above when executed by one or more processors (202).

In the existing wireless LAN system, although general relay operation is defined, a relay method in which a non-AP STA controlled by an AP is used as a relay STA is not stipulated. Considering this, the proposed method in the present disclosure is about a relay method in which a non-AP STA controlled by an AP is used as a relay STA, and as in the present disclosure, a procedure/information for initiating the relay operation and a specific relay operation procedure need to be newly defined. The proposed method in the present disclosure can reduce the influence of range and obstacles by performing signal transmission to the STA using a relay, and can achieve a technical effect of reducing the latency and improving the throughput by improving the received SNR of the STA.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, 5G system, but may be applied to various WLAN or wireless communication systems other than the IEEE 802.11-based system.

## Claims

1. A method performed by a first station (STA) in a wireless LAN system, the method comprising:
receiving, from an access point (AP), a request frame related to initiation of a relay operation targeting one or more second STAs;
transmitting, to the AP, a response frame for the request frame;
receiving, from the AP, a physical layer protocol data unit (PPDU) including data based on the relay operation; and
transmitting, to the one or more second STAs, the PPDU including the data,
wherein the request frame includes ID information for identifying the one or more second STAs as a destination of the relay operation.

2. The method of claim 1,
wherein the ID information is set based on a mode of the relay operation indicated by relay mode related information included in the request frame.

3. The method of claim 1,
wherein, based on the mode of the relay operation corresponding to a mode targeting a single second STA, the ID information is set to an ID of the single second STA, and
wherein, based on the mode of the above relay operation corresponding to a mode targeting a plurality of second STAs, the ID information is set to a specific ID for grouping the plurality of second STAs.

4. The method of claim 1,
wherein the request frame further includes ID information for identifying the AP as a source of the relay operation and ID information for identifying the first STA as a relay of the relay operation.

5. The method of claim 1,
wherein the request frame includes at least one of information for a number of second STAs participating in the relay operation or information for an ID list for second STAs participating in the relay operation.

6. The method of claim 1,
wherein the request frame includes one or more parameters related to the relay operation, and
wherein the one or more parameters include one or more of bandwidth information for the relay operation, modulation and coding scheme (MCS) information, MCS difference related information, or space time stream number information.

7. The method of claim 6,
wherein the MCS difference related information includes at least one of information indicating whether different MCSs are applicable to transmission and reception by the first STA in the relay operation or information indicating a difference in MCS values applied to transmission and reception by the first STA in the relay operation.

8. The method of claim 1,
wherein the request frame includes resource unit (RU) allocation information for transmission of the response frame, and
wherein the response frame is transmitted through a resource according to the RU allocation information.

9. The method of claim 1,
wherein the request frame further includes information indicating whether immediate ACK frame transmission is supported for receiving a data frame from the AP.

10. The method of claim 1,
wherein the response frame corresponds to one of a clear to send (CTS) frame or a frame including one or more fields related to the relay operation.

11. The method of claim 10,
wherein the one or more fields include at least one of a first field indicating ID information of an STA transmitting the response frame, a second field indicating whether the relay operation is accepted, a third field indicating parameters related to the relay operation, and a fourth field indicating whether to transmit an immediate ACK.

12. The method of claim 11,
wherein whether the third field is included is determined based on the value indicated by the second field.

13. The method of claim 1, further comprising:
transmitting an ACK frame to the AP after SIFS after receiving a PPDU including the data,
wherein ACK information in the ACK frame is set based on whether one MAC header included in the PPDU including the data has been received and an FCS check.

14. The method of claim 13,
wherein based on a PPDU including the data being configured using an A-MPDU frame format including of one or more subframes, the one MAC header corresponds to a MAC header included in a first subframe among the one or more subframes.

15. The method of claim 13,
based on the PPDU including the data being transmitted to a single second STA, further comprising: receiving an ACK frame from the single second STA after SIFS after transmitting the PPDU including the data; and transmitting an ACK frame to the AP after SIFS after receiving the ACK frame from the single second STA,
based on the PPDU including the data being transmitted to a plurality of second STAs, further comprising: transmitting a block-ACK request frame to the plurality of second STAs after SIFS after transmitting the PPDU including the data; receiving an ACK frame from the plurality of second STAs after SIFS after transmitting the block-ACK request frame; and transmitting an ACK frame to the AP after SIFS after receiving the ACK frames from the plurality of second STAs.

16. The method of claim 1,
wherein an U-SIG field of a PPDU received from the AP includes TXOP information for the relay operation.

17. The method of claim 1,
wherein the first STA corresponds to a non-AP STA controlled by the AP for relay transmission.

18. An apparatus for a first station (STA) in a wireless local area network (WLAN) system, the apparatus comprising:
at least one transceiver; and
at least one processor connected to the at least one transceiver,
wherein the at least one processor is configured to:
receive, from an access point (AP), a request frame related to initiation of a relay operation targeting one or more second STAs;
transmit, to the AP, a response frame for the request frame;
receive, from the AP, a physical layer protocol data unit (PPDU) including data based on the relay operation; and
transmit, to the one or more second STAs, the PPDU including the data,
wherein the request frame includes ID information for identifying the one or more second STAs as a destination of the relay operation.

19. A method performed by an AP in a wireless LAN system, the method comprising:
transmitting, to a first STA, a request frame related to initiation of a relay operation targeting one or more second STAs;
receiving, from the first STA, a response frame to the request frame; and
transmitting, to the first STA, a physical layer protocol data unit (PPDU) including data based on the relay operation,
wherein the request frame includes ID information for identifying the one or more second STAs as a destination of the relay operation.

20. An apparatus for an access point (AP) in a wireless local area network (WLAN) system, the apparatus comprising:
at least one transceiver; and
at least one processor connected to the at least one transceiver,
wherein the at least one processor is configured to:
transmit, to a first STA, a request frame related to initiation of a relay operation targeting one or more second STAs;
receive, from the first STA, a response frame to the request frame; and
transmit, to the first STA, a physical layer protocol data unit (PPDU) including data based on the relay operation,
wherein the request frame includes ID information for identifying the one or more second STAs as a destination of the relay operation.

21. A processing unit configured to control a station (STA) in a wireless local area network (WLAN) system, the processing unit comprising:
at least one processor; and
at least one computer memory operably connected to the at least one processor, and based on being executed by the at least one processor, storing instructions for performing a method according to any one claim of claims 1 to 17.

22. At least one non-transitory computer-readable medium storing at least one instruction, wherein:
the at least one instruction controls a device to perform a method according to any one claim of claims 1 to 17 in a wireless local area network (WLAN) system by being executed by at least one processor.
